# EUROPÄISCHE PATENTSCHRIFT

(11) **EP 1 530 537 B1**
(45) Veröffentlichungstag und Bekanntmachung des Hinweises auf die Patenterteilung: **18.01.2006**
(21) Anmeldenummer: 03753258.7
(22) Anmeldetag: 18.08.2003
(51) Int. Cl.: B62K 21/12, B62J 29/00

(54) **LENKERHÖRNCHEN**
BAR END
EMBOUT DE GUIDON

(30) Priorität: 19.08.2002 DE 10238686
(43) Veröffentlichungstag der Anmeldung: 18.05.2005
(73) Patentinhaber: Schiszler, Achim, 83661 Lenggries (DE); Schweiger, Michael, 83661 Lenggries (DE)
(72) Erfinder: GLÜCK, Peter, 83661 Lenggries (DE)
(74) Vertreter: TBK-Patent
(86) Internationale Anmeldenummer: PCT/DE2003/002768
(87) Internationale Veröffentlichungsnummer: WO 2004/018282

(56) Entgegenhaltungen:
- EP-A- 0 765 798
- EP-A- 0 936 135
- DE-A- 3 923 706
- DE-U- 29 603 544

## Beschreibung

Die vorliegende Erfindung betrifft ein Lenkerhörnchen, welches an eine Lenkstange eines durch die Lenkstange lenkbaren Fahrzeugs montierbar ist.

Durch eine Lenkstange lenkbare Fahrzeuge sind beispielsweise Fahrräder, Roller, Dreiräder, Mofas, Mopeds, Motorräder etc.

Lenkerhörnchen sind zusätzliche Griffe, die an der Lenkstange, genauer gesagt an den Lenkstangen-Enden ungefähr im rechten Winkel zur Lenkstange angebracht werden und eine ergonomischere Griffhaltung ermöglichen. Lenkerhörnchen kommen bislang insbesondere bei Fahrrädern zum Einsatz und sind in einer Vielzahl von Ausführungsformen bekannt.

Durch das Anbringen von Lenkerhörnchen an eine Lenkstange steht an der Lenkstange weniger Platz für weitere Vorrichtungen zu Verfügung, die üblicherweise an der Lenkstange montiert sind. Zu diesen weiteren Vorrichtungen gehören beispielsweise, aber nicht ausschließlich, die Betätigungsvorrichtungen für die Handbremsen, eine oder mehrere Schaltvorrichtungen für die Gangschaltung, eine Klingel, ein oder mehrere Rückspiegel, ein Fahrradcomputer, etc.. Der verringerte Platz, der für die Montage der genannten oder sonstiger Vorrichtungen zur Verfügung steht, hat zur Folge, daß nicht mehr alle Vorrichtungen an der Lenkstange montiert werden können und/oder daß einzelne, mehrere oder alle dieser Vorrichtungen ungünstiger angeordnet werden müssen als es der Fall wäre, wenn an der Lenkstange keine Lenkerhörnchen angebracht sind.

Dadurch gehen die Vorteile, die sich durch die Verwendung von Lenkerhörnchen erzielen lassen, nämlich die verbesserte Ergonomie, ganz oder teilweise wieder verloren.

Aus der DE-U-296 03 544 ist ein Lenkerhörnchen bekannt, welches an der Lenkstange eines Fahrrad montierbar ist. Das Lenkerhörnchen wird über eine mittels einer Schraube erzielbare Klemmung an einem äußeren Bereich der Lenkstange des Fahrrads festgeklemmt.

Aus der EP-A-0 936 135 ist eine Spiegelanordnung für ein Fahrrad bekannt, bei dem ein kompakter, stabiler Rückspiegel an den Enden der Lenkstange oder eines Griffstangenteils des Fahrrads angebracht wird. Die Montage kann mittels eines Klemmsystems erfolgen, das eine Klemmung am Innendurchmesser der Lenkstange oder des Griffes ermöglicht.

Der vorliegenden Erfindung liegt daher die Aufgabe zugrunde, ein Lenkerhörnchen zu schaffen, bei dessen Verwendung die vorstehend genannten Einschränkungen bei der Montage und/oder der Verwendung weiterer Vorrichtungen an der Lenkstange nicht oder zumindest nur in eingeschränktem Umfang auftreten.

Diese Aufgabe wird erfindungsgemäß durch das in Patentanspruch 1 beanspruchte Lenkerhörnchen gelöst.

Das erfindungsgemäße Lenkerhörnchen zeichnet sich dadurch aus, daß in diesem ein Rückspiegelsystem integriert ist.

Dadurch entfällt die Notwendigkeit, einen oder mehrere Rückspiegel an der Lenkstange zu montieren.

Der Wegfall dieser Notwendigkeit hat den positiven Effekt, dass für die weiteren Vorrichtungen, die an der Lenkstange zu montieren sind, also beispielsweise für die Betätigungsvorrichtungen für die Handbremsen, einen oder mehrere Schaltvorrichtungen für die Gangschaltung, eine Klingel, einen Fahrradcomputer, etc. mehr Platz zur Verfügung steht. All diese Vorrichtungen können auch an Lenkstangen montiert werden, an welchen Lenkerhörnchen angebracht sind, und können zudem so angeordnet werden, dass sie ergonomisch bedienbar bzw. verwendbar sind.

Unabhängig hiervon erweist es sich ferner als vorteilhaft, daß der Rückspiegel sehr gut vor Beschädigung und Zerstörung geschützt ist, und daß der Rückspiegel nicht mehr eine so sperrige und exponierte Vorrichtung darstellt, wie es bei nicht in Lenkerhörnchen integrierten Rückspiegeln der Fall ist.

Vorteilhafte Weiterbildungen der Erfindung sind den Unteransprüchen, der folgenden Beschreibung und den Figuren entnehmbar.

Die Erfindung wird nachfolgend anhand eines Ausführungsbeispiels unter Bezugnahme auf die Figuren näher erläutert. Es zeigen:
- Fig. 1: eine Draufsicht auf eine Lenkstange, an welcher Lenkerhörnchen mit integrierten Rückspiegeln angebracht sind,
- Fig. 2: eine Ansicht des gemäß Fig. 1 rechten Lenkerhörnchens von hinten (bezogen auf die Fahrtrichtung), und
- Fig. 3: eine Querschnittsansicht des gemäß Fig. 1 rechten Lenkerhörnchens (Schnitt längs einer in Fig. 1 gezeigten Linie III-III).

Das im folgenden beschriebene Lenkerhörnchen ist besonders als Lenkerhörnchen für ein Fahrrad geeignet. Ein Lenkerhörnchen der im folgenden beschriebenen Art kann auch bei beliebigen anderen Fahrzeugen zum Einsatz kommen, die eine Lenkstange aufweisen, bspw. auch bei Rollern, Dreirädern, Mofas, Mopeds, Motorrädern, etc.

Das Lenkerhörnchen ist dazu ausgelegt, an einer Lenkstange montiert zu werden, wobei es sich bei der Lenkstange sowohl um eine gerade Lenkstange als auch um eine gebogene Lenkstange handeln kann.

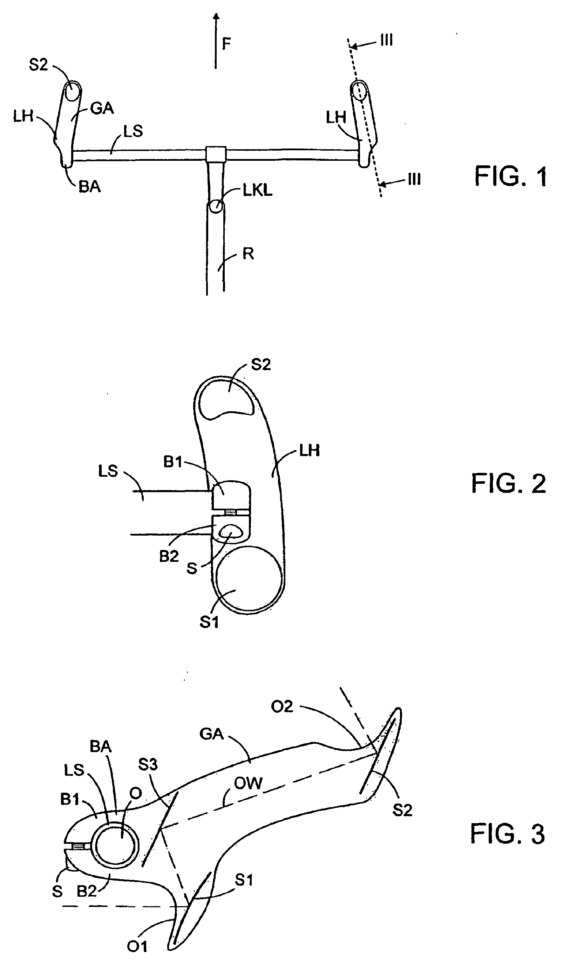

Eine mit den im folgenden näher beschriebenen Lenkerhörnchen versehene Lenkstange ist schematisch in Fig. 1 gezeigt. Die Fig. 1 ist eine Draufsicht von oben. Die Lenkstange ist mit dem Bezugszeichen LS bezeichnet und die Lenkerhörnchen mit dem Bezugszeichen LH. In der Fig. 1 sind darüber hinaus das Lenkkopflager und ein Teil des Rahmens des Fahrrads gezeigt, wobei das Lenkkopflager mit dem Bezugszeichen LKL, und der Rahmen mit dem Bezugszeichen R bezeichnet sind. Ein Pfeil F bezeichnet die Fahrtrichtung des in der Figur 1 ausschnittsweise gezeigten Fahrrades.

Im folgenden wird der Aufbau des gemäß Figur 1 rechten Lenkerhörnchens LH beschrieben. Die Ausführungen gelten jedoch für das linke Lenkerhörnchen entsprechend.

Die Figur 2 zeigt eine Ansicht des rechten Lenkerhörnchens von hinten (bezogen auf die Fahrtrichtung F).

Die Figur 3 zeigt eine Schnittansicht des rechten Lenkerhörnchens, genauer gesagt einen Schnitt längs der in der Figur 1 gezeigten Schnittlinie III-III.

Das Lenkerhörnchen umfaßt einen als Griff verwendbaren Griff-Abschnitt GA und einen mit dem Griff-Abschnitt GA verbundenen und zur Befestigung des Lenkerhörnchens an der Lenkstange dienenden Befestigungs-Abschnitt BA.

Der Befestigungs-Abschnitt BA weist im betrachteten Beispiel zwei relativ zueinander bewegbare Backen B1 und B2 auf, deren Abstand durch Eindrehen oder Ausdrehen einer am Ende der Backen B1, B2 vorgesehenen Schraube S veränderbar ist. Durch die Backen B1, B2 wird eine quer zu diesen verlaufende Öffnung 0 definiert. Diese Öffnung O weist einen im wesentlichen kreisförmigen Querschnitt auf, dessen Durchmesser im gelösten Zustand der Schraube S größer ist als der Außendurchmesser der Lenkstange LS, und im angezogenen Zustand der Schraube S kleiner ist als der Außendurchmesser der Lenkstange LS. Zur Montage des Lenkerhörnchens LH wird der Befestigungs-Abschnitt BA auf die Lenkstange LS geschoben, so daß das seitliche Ende der Lenkstange LS in der Öffnung O zu liegen kommt. Danach wird die Schraube S angezogen, wodurch das Lenkerhörnchen LH an der Lenkstange LS festgeklemmt wird und nicht mehr relativ zur Lenkstange LS bewegbar ist.

Es dürfte einleuchten, daß das Lenkerhörnchen LH auch anders an der Lenkstange LS befestigt werden kann. Beispielsweise wäre es möglich, den Befestigungs-Abschnitt BA so auszubilden, daß er von der Seite her in das die Lenkstange bildende Rohr eingesteckt und von innen mit der Lenkstange LS verklemmt wird. Die Art und Weise, auf welche das Lenkerhörnchen LH an der Lenkstange LS befestigt wird, spielt für das vorliegend betrachtete Lenkerhörnchen jedoch nur eine untergeordnete Rolle.

Wie insbesondere aus der Figur 3 ersichtlich ist, wird das Lenkerhörnchen LH vorzugsweise so an der Lenkstange befestigt, daß die Längsachse des Griff-Abschnittes GA gegenüber der Horizontalen um ca. 20° nach oben geneigt ist. Dadurch nimmt der Fahrer eine ergonomisch besonders günstige Haltung ein. Prinzipiell kann dieser Winkel aber auch beliebig viel größer oder kleiner sein.

Der Griff-Abschnitt GA des Lenkerhörnchens LH ist ein rohrförmiges Gebilde, das außen so geformt ist, daß es einen ergonomisch geformten Griff ergibt, und im Inneren drei Spiegel S1, S2, und S3 enthält.

Der erste Spiegel S1 ist an dem dem Befestigungs-Abschnitt BA zugewandten Ende des Griff-Abschnittes GA vorgesehen, und der zweite Spiegel S2 am gegenüberliegenden Ende des Griff-Abschnittes GA. Der dritte Spiegel S3 ist zwischen dem ersten Spiegel S1 und dem zweiten Spiegel S2 angeordnet.

Der erste Spiegel S1 ist in der Nähe einer im Griff-Abschnitt GA vorgesehenen ersten Öffnung O1 angeordnet. Diese erste Öffnung O1 kommt im an die Lenkstange LS montierten Zustand des Lenkerhörnchens LH unterhalb der Lenkstange LS zu liegen und gibt eine Sichtverbindung zwischen dem ersten Spiegel und dem bezüglich der Fahrtrichtung F hinter dem Lenkerhörnchen LH liegenden Bereich frei.

Der erste Spiegel S1 ist so angeordnet, daß durch ihn das Abbild des bezüglich der Fahrtrichtung F hinter dem Lenkerhörnchen liegenden Bereiches über den dritten Spiegel S3 auf den zweiten Spiegel S2 reflektiert wird.

Der zweite Spiegel S2 ist in der Nähe einer im Griff-Abschnitt GA vorgesehenen zweiten Öffnung O2 angeordnet. Diese zweite Öffnung O2 ist an einer Stelle vorgesehen, die es dem Fahrer ermöglicht, ohne Veränderung seiner Position auf den zweiten Spiegel S2 zu schauen. Der zweite Spiegel S2 ist so angeordnet, daß der Fahrer darin das vom ersten Spiegel S1 erfaßte und über den dritten Spiegel S3 auf den zweiten Spiegel S2 reflektierte Abbild des bezüglich der Fahrtrichtung F hinter dem Lenkerhörnchen LH liegenden Bereiches sieht.

Im betrachteten Beispiel ist es so,
- daß sämtliche Spiegel bezüglich der Längsachse des Griff-Abschnittes GA um einen Winkel von 45° geneigt sind,
- daß das vom ersten Spiegel S1 erfaßte Abbild des hinter dem Lenkerhörnchen LH liegenden Bereiches auf einem senkrecht zur Längsachse des Griff-Abschnittes GA verlaufenden Weg zum dritte Spiegel S3 reflektiert wird, und
- daß das sich auf dem dritten Spiegel S3 ergebende Abbild des hinter dem Lenkerhörnchen liegenden Bereiches auf einem parallel zur Längsachse des Griff-Abschnittes GA verlaufenden Weg zum zweiten Spiegel S2 reflektiert wird.

Der optische Weg, über welchen das Abbild des bezüglich der Fahrtrichtung F hinter dem Lenkerhörnchen LH liegenden Bereiches über den ersten Spiegel S1 und den dritten Spiegel S3 auf den zweiten Spiegel S2 abgebildet wird, ist in der Figur 3 durch eine mit dem Bezugszeichen OW bezeichnete Linie veranschaulicht.

Der erste Spiegel S1 ist im betrachteten Beispiel ein konvexer (nach außen gewölbter) Spiegel; der zweite Spiegel S2 und der dritte Spiegel S3 haben plane Spiegelflächen.

Die Spiegel weisen im betrachteten Beispiel eine kreisförmige oder ovale Form mit einem Durchmesser von ca. 2 bis 3 cm auf.

Das Lenkerhörnchen besteht (mit Ausnahme der Spiegel und der Schraube) beispielsweise aus Kunststoff (Herstellung z.B. durch Spritzgußverfahren), oder aus Aluminium (Herstellung z.B. durch Druckgußverfahren), oder Kunstharz (Herstellung z.B. in GfK/CfK-Laminierweise). Das Lenkerhörnchen, genauer gesagt der die Spiegel enthaltende Griff-Abschnitt GA desselben bildet somit ein stabiles Gehäuse, welches die Spiegel zuverlässig vor Beschädigung und Zerstörung schützt. Der Griff-Abschnitt GA wird durch den darin integrierten Rückspiegel nicht oder nur unwesentlich größer als der Griff-Abschnitt eines herkömmlichen Lenkerhörnchens, so daß ein solcher Rückspiegel in keinster Weise als störend empfunden wird.

Die Befestigung der Spiegel im Griff-Abschnitt GA kann beispielsweise durch Kleben, Schrauben, Klemmverbindungen oder Rastverbindungen erfolgen.

Es dürfte einleuchten und bedarf keiner näheren Erläuterung, daß die Größe, die Form, die Lage und die Ausrichtung der Spiegel sowie der optische Weg, über welchen das Abbild des bezüglich der Fahrtrichtung hinter dem Lenkerhörnchen liegenden Bereiches auf den vom Fahrer betrachtbaren Spiegel projiziert wird, anders als im beschriebenen Beispiel gewählt werden können. Es kann auch eine andere Anzahl von Spiegeln, insbesondere eine beliebige andere Anzahl von dritten Spiegeln zum Einsatz kommen.

Entscheidend ist, daß der Fahrer - vorzugsweise ohne eine Veränderung seiner Position - im zweiten Spiegel ein Abbild des bezüglich der Fahrtrichtung hinter dem Lenkerhörnchen liegenden Bereiches sehen kann.

Der vom Fahrer betrachtbare Spiegel (der dritte Spiegel S2) könnte auch durch eine Mattscheibe ersetzt werden.

Unabhängig hiervon kann es sich als vorteilhaft erweisen, wenn die erste Öffnung O1 und/oder die zweite Öffnung O2 durch eine durchsichtige Abdeckung, beispielsweise durch eine Plexiglasscheibe bedeckt werden. Dadurch kann verhindert werden, daß Schmutz auf die Spiegel und/oder die Mattscheibe gelangt, und darüber hinaus kann ausgeschlossen werden, daß sich jemand an den Öffnungen verletzt.

Eine weitere vorteilhafte Weiterbildung besteht darin, daß das Lenkerhörachen so aufgebaut wird, daß der Fahrer die Position und/oder die Stellung einzelner, mehrerer oder aller Spiegel wunschgemäß einstellen kann. Dadurch kann der Rückspiegel optimal an die gegebenen Verhältnisse (Größe bzw. Oberkörperlänge des Fahrers, Sitzhöhe, Haltung des Fahrers, Stellung des Lenkerhörnchens etc.) angepaßt werden.

Ebenso kann es sich als vorteilhaft erweisen, wenn einzelne, mehrere, oder alle Spiegel auswechselbar sind.

### Bezugszeichenliste

- BA: Befestigungs-Abschnitt
- B1, B2: Backen
- F: Fahrtrichtung
- GA: Griff-Abschnitt
- LH: Lenkerhörnchen
- LKL: Lenkkopflager
- LS: Lenkstange
- O: Öffnung
- OW: optischer Weg
- O1, O2: Öffnung
- R: Rahmen
- S: Schraube
- S1, S2, S3: Spiegel

## Patentansprüche

1. Lenkerhörnchen, welches an eine Lenkstange eines durch die Lenkstange lenkbaren Fahrzeugs montierbar ist, **dadurch gekennzeichnet, dass** im Lenkerhörnchen (LH) ein Rückspiegel integriert ist, der einen ersten Spiegel (S1) umfaßt, welcher so angeordnet ist, dass er ein Abbild des bezüglich der Fahrtrichtung (F) hinter dem Lenkerhörnchen (LH) liegenden Bereichs reflektiert, wobei der Rückspiegel einen zweiten Spiegel (S2) und n dritte Spiegel (S3) umfaßt, wobei n eine ganze Zahl ist, die größer oder gleich Null ist, und dass die ersten bis dritten Spiegel so angeordnet sind, dass das vom ersten Spiegel (S1) reflektierte Abbild des bezüglich der Fahrtrichtung (F) hinter dem Lenkerhörnchen (LH) liegenden Bereichs über die dritten Spiegel (S3) auf den zweiten Spiegel (S2) projiziert wird.

2. Lenkerhörnchen nach Anspruch 1, **dadurch gekennzeichnet, daß** der erste Spiegel (S1) in der Nähe einer im Lenkerhörnchen (LH) vorgesehenen ersten Öffnung (O1) angeordnet ist, welche eine Sichtverbindung zwischen dem ersten Spiegel und dem bezüglich der Fahrtrichtung (F) hinter dem Lenkerhörnchen (LH) liegenden Bereich freigibt.

3. Lenkerhörnchen nach Anspruch 1 oder 2, **dadurch gekennzeichnet, daß** der zweite Spiegel (S2) so angeordnet ist, daß der Fahrer des Fahrzeugs darin ein Abbild des bezüglich der Fahrtrichtung (F) hinter dem Lenkerhörnchen (LH) liegenden Bereichs sehen kann.

4. Lenkerhörnchen nach einem der Ansprüche 1 bis 3, **dadurch gekennzeichnet, daß** der zweite Spiegel (S2) in der Nähe einer im Lenkerhörnchen (LH) vorgesehenen zweiten Öffnung (O2) angeordnet ist, und daß diese zweite Öffnung so angeordnet und ausgebildet ist, daß der Fahrer des Fahrzeugs durch sie hindurch auf den zweiten Spiegel (S2) blicken kann.

5. Lenkerhörnchen nach einem der Ansprüche 1 bis 4, **dadurch gekennzeichnet, daß** anstelle des zweiten Spiegels (S2) eine Mattscheibe vorgesehen ist.

6. Lenkerhörnchen nach einem der Ansprüche 1 bis 5, **dadurch gekennzeichnet, daß** der erste Spiegel (S1) konvex gewölbt ist.

7. Lenkerhörnchen nach einem der Ansprüche 1 bis 4, 6, **dadurch gekennzeichnet, daß** der zweite Spiegel (S2) plan ist.

8. Lenkerhörnchen nach einem der Ansprüche 1 bis 7, **dadurch gekennzeichnet, daß** die dritten Spiegel (S3) plan sind.

9. Lenkerhörnchen nach einem der Ansprüche 1 bis 8, **dadurch gekennzeichnet, daß** die Position und/oder die Stellung der Spiegel zumindest teilweise veränderbar ist.

10. Lenkerhörnchen nach Anspruch 2, **dadurch gekennzeichnet, daß** die erste Öffnung (O1) durch ein Element aus durchsichtigem Material bedeckt ist.

11. Lenkerhörnchen nach Anspruch 4, **dadurch gekennzeichnet, daß** die zweite Öffnung (O2) durch ein Element aus durchsichtigem Material bedeckt ist.

12. Lenkerhörnchen nach Anspruch 10 oder 11, **dadurch gekennzeichnet, daß** das Element aus durchsichtigem Material aus Plexiglas besteht.

## Claims

1. Bar end mountable on a handlebar of a vehicle steered by the handlebar, **characterized in that** a rear-view mirror comprising a first mirror (S1) arranged so that it reflects an image of the area behind (in the direction of travel (F)) the bar end (LH) is integrated in the bar end (LH), the rear-view mirror comprising a second mirror (S2) and n third mirrors (S3) where n is an integer greater than or equal to zero, and **in that** the first to third mirrors are arranged so that the image of the area behind (in the direction of travel (F)) the bar end (LH) reflected by the first mirror (S1) is projected by the third mirrors (S3) on to the second mirror (S2).

2. Bar end according to Claim 1, **characterized in that** the first mirror (S1) is arranged in the proximity of a first aperture (O1) provided in the bar end (LH) creating a line of sight between the first mirror and the area behind (in the direction of travel (F)) the bar end (LH).

3. Bar end according to Claim 1 or Claim 2, **characterized in that** the second mirror (S2) is arranged so that the rider can see in it an image of the area behind (in the direction of travel (F)) the bar end (LH).

4. Bar end according to any one of Claims 1 to 3, **characterized in that** the second mirror (S2) is arranged in the proximity of a second aperture (O2) provided in the bar end (LH), and **in that** this second aperture is arranged and configured so that the rider can view the second mirror (S2) through it.

5. Bar end according to any one of Claims 1 to 4, **characterized in that** a viewing screen is provided in lieu of the second mirror (S2).

6. Bar end according to any one of Claims 1 to 5, **characterized in that** the first mirror (S1) has convex curvature.

7. Bar end according to any one of Claims 1 to 4, 6, **characterized in that** the second mirror (S2) is plane.

8. Bar end according to any one of Claims 1 to 7, **characterized in that** the third mirrors (S3) are plane.

9. Bar end according to any one of Claims 1 to 8, **characterized in that** the position and/or setting of the mirrors is, at least in part, modifiable.

10. Bar end according to Claim 2, **characterized in that** the first aperture (O1) is covered by an element of transparent material.

11. Bar end according to Claim 4, **characterized in that** the second aperture (O2) is covered by an element of transparent material.

12. Bar end according to Claim 10 or Claim 11, **characterized in that** the element of transparent material consists of polymethyl methacrylate.

## Revendications

1. Embout de guidon, destiné à être monté sur un guidon d'un véhicule pouvant être dirigé au moyen du guidon, **caractérisé en ce que** dans l'embout de guidon (LH) est intégré un rétroviseur qui comporte un premier miroir (S1), qui est agencé de telle sorte qu'il réfléchit une image de la zone située derrière l'embout de guidon (LH), par référence au sens de déplacement (F), le rétroviseur comportant un deuxième miroir (S2) et n troisièmes miroirs (S3), n étant un nombre entier supérieur ou égal à zéro, et **en ce que** les premiers jusqu'aux troisièmes miroirs sont agencés de telle sorte que l'image de la zone située derrière l'embout de guidon (LH), par référence au sens de déplacement (F), réfléchie par le premier miroir (S1), est projetée sur le deuxième miroir (S2) par l'intermédiaire des troisièmes miroirs (S3).

2. Embout de guidon selon la revendication 1, **caractérisé en ce que** le premier miroir (S1) est agencé à proximité d'un premier orifice (O1), qui est prévu dans l'embout de guidon (LH) et qui dégage une communication visuelle entre le premier miroir et la zone située derrière l'embout de guidon (LH), par référence au sens de déplacement (F).

3. Embout de guidon selon la revendication 1 ou 2, **caractérisé en ce que** le deuxième miroir (S2) est agencé de telle sorte que le conducteur du véhicule peut y voir une image de la zone située derrière l'embout de guidon (LH), par référence au sens de déplacement (F).

4. Embout de guidon selon l'une quelconque des revendications 1 à 3, **caractérisé en ce que** le deuxième miroir (S2) est agencé à proximité d'un deuxième orifice (O2) prévu dans l'embout de guidon (LH), et **en ce que** ledit deuxième orifice (O2) est agencé et conçu de telle sorte que le conducteur du véhicule peut regarder à travers celui-ci sur le deuxième miroir (S2).

5. Embout de guidon selon l'une quelconque des revendications 1 à 4, **caractérisé en ce qu'**en lieu et place du deuxième miroir (S2), il est prévu un verre dépoli.

6. Embout de guidon selon l'une quelconque des revendications 1 à 5, **caractérisé en ce que** le premier miroir (S1) est réalisé avec une courbure convexe.

7. Embout de guidon selon l'une quelconque des revendications 1 à 4, 6, **caractérisé en ce que** le deuxième miroir (S2) est plan.

8. Embout de guidon selon l'une quelconque des revendications 1 à 7, **caractérisé en ce que** les troisièmes miroirs (S3) sont plans.

9. Embout de guidon selon l'une quelconque des revendications 1 à 8, **caractérisé en ce que** le positionnement et/ou la position des miroirs est modifiable au moins en partie.

10. Embout de guidon selon la revendication 2, **caractérisé en ce que** le premier orifice (O1) est obturé par un élément en matériau transparent.

11. Embout de guidon selon la revendication 4, **caractérisé en ce que** le deuxième orifice (O2) est obturé par un élément en matériau transparent.

12. Embout de guidon selon la revendication 10 ou 11, **caractérisé en ce que** l'élément en matériau transparent est réalisé en plexiglas.
